# DEMANDE DE BREVET EUROPEEN

(11) **EP 1 785 406 A1**
(43) Date de publication de la demande: **16.05.2007**
(21) Numéro de dépôt: 06291759.6
(22) Date de dépôt: 14.11.2006
(51) Int. Cl.: C04B 28/16, C04B 28/14

(54) **Procédé de collage sur chape à base de sulfate de calcium**

(30) Priorité: 14.11.2005 FR 0511533
(71) Demandeur: La Chape Liquide S.A.S., 84000 Avignon (FR)
(72) Inventeur: Jalla, Sébastian, 30400 Villeneuve les Avignon (FR)
(74) Mandataire: Vieillefosse, Jean-Claude

(57) **Abrégé**

L'invention a pour objet un procédé de collage sur une chape à base de sulfate de calcium ayant une humidité résiduelle de plus de 1% et/ou après une durée, mesurée après coulage de la chape, inférieure à 3 semaines, à l'aide d'un mortier-colle à base de sulfate de calcium hydrofugé et/ou sur une chape hydrofugée.

L'invention a aussi pour objet l'utilisation d'un mortier-colle à base de sulfate de calcium hydrofugé pour le collage sur une chape à base de sulfate de calcium ayant une humidité résiduelle de plus de 1% et/ou après une durée, mesurée après coulage de la chape, inférieure à 3 semaines.

## Description

### DOMAINE TECHNIQUE

L'invention concerne un procédé de collage de sur des surfaces de mortiers à base de sulfate de calcium, notamment anhydrite.

### ETAT DE LA TECHNIQUE

Il est connu que des compositions aqueuses de sulfate de calcium (anhydre) ayant des propriétés hydrauliques sont notamment utilisées pour la réalisation de revêtements horizontaux tels que des chapes de sols. Un revêtement de sol dans le cadre de la présente invention est notamment du grès cérame, grés étiré, grès porcelainé, terre cuite, granit, pâte de verre, dalles de pierre calcaire, marbre, pierre reconstituée, et de façon générale de tout matériau formant carrelage.

Le collage des carrelages ou autre revêtements de sols sur cette chape à base de sulfate de calcium intervient après un certain temps après le coulage, lorsque la teneur résiduelle en eau présente dans la chape est inférieure à 1%. La raison en est que les règles de l'art imposent une résistance à l'arrachement qui doit être supérieure à 0.5 N/mm². Or il est connu que la résistance à l'arrachement est fonction de la teneur en eau des matériaux. Sur une chape à base de sulfate de calcium on utilise en général un mortier-colle à base de ciment qui présente le risque de conduire à la formation de sels gonflants de type ettringite à l'interface de la chape. Ces sels gonflants peuvent conduire à des décollements de carrelage sur des périodes allant de quelques mois à plusieurs années en fonction du trafic. Ces sels gonflants proviennent de la combinaison d'aluminates du ciment, de sulfates du CaSO₄ et de calcium soit du ciment soit du CaSO₄, soit des sables utilisés comme charges, le tout en présence d'eau. Ces échanges ioniques conduisant à la formation d'ettringite peuvent être réduits par l'utilisation d'un primaire de type époxy, acrylique, méthacrylique, uréthane en phase aqueuse. En cas de mise en oeuvre de ce primaire sur une chape trop humide, ce dernier verra son efficacité en tant que barrière chimique et physique fortement dégradée.

On peut aussi utiliser des mortiers-colles à base de sulfate de calcium, ce qui limite le risque de la formation de sels gonflants puisque ce dernier ne contient pas d'aluminates. Par contre, l'eau résiduelle présente dans la chape au moment de l'application va migrer dans la couche de colle appliquée et détériorer les propriétés d'adhérence du mortier colle car ce dernier restera humide et aura donc des performances mécaniques réduites durant toute le durée nécessaire au séchage de la chape recouverte.

Or sur les chantiers, il existe un besoin de poser le revêtement de sol le plus vite possible après le coulage de la chape: les temps d'intervention sur le chantier sont un handicap à l'extension de l'utilisation de chape à base de sulfate de calcium. Un taux résiduel de 1% d'humidité impose d'attendre des temps relativement longs, typiquement de l'ordre de 28 jours sur une chape de 4 cm d'épaisseur dans des conditions de séchage qualifiées de normales.

Il existe donc un besoin pour réduire le temps entre le coulage de la chape à base de sulfate de calcium et le collage à l'aide d'un mortier-colle à base de sulfate de calcium.

### RESUME DE L'INVENTION

L'invention a pour objet un procédé de collage sur une chape à base de sulfate de calcium ayant une humidité résiduelle de plus de 1% à l'aide d'un mortier-colle à base de sulfate de calcium hydrofugé et/ou sur une chape hydrofugée.

L'invention a aussi pour objet un procédé de collage sur une chape à base de sulfate de calcium après une durée, mesurée après coulage de la chape, inférieure à 3 semaines, à l'aide d'une mortier-colle à base de sulfate de calcium hydrofugé et/ou sur une chape hydrofugée.

Selon un mode de réalisation, l'humidité est comprise entre 1 et 5%, de préférence entre 1 et 3%.

Selon un mode de réalisation, la durée de collage, mesurée après coulage de la chape, est inférieure à 3 semaines, de préférence entre 1 et 2 semaines.

Un mode de réalisation préféré est celui dans lequel la chape n'est pas hydrofugée (chape standard) et le mortier-colle est hydrofugé.

Selon un autre mode de réalisation, la chape est hydrofugée et le mortier-colle n'est pas hydrofugé.

Selon un mode de réalisation, l'adhérence mesurée 7 jours après collage est supérieure ou égale à 0,5 N/mm².

Selon un mode de réalisation, la chape est à base de sulfate de calcium anhydre.

Selon un mode de réalisation, le mortier-colle est à base de semi-hydrate alpha.

L'invention a encore pour objet l'utilisation d'un mortier-colle à base de sulfate de calcium hydrofugé pour le collage sur une chape à base de sulfate de calcium ayant une humidité résiduelle de plus de 1% et/ou après une durée, mesurée après coulage de la chape, inférieure à 3 semaines.

### EXPOSE DETAILLE DE MODES DE REALISATION DE L'INVENTION

### Chape à base de sulfate de calcium.

Dans le cadre de la présente invention par compositions pour chape à base de sulfate de calcium, on entend des compositions dans lesquelles le sulfate de calcium présentant des propriétés hydrauliques représente au moins 85% en poids du liant hydraulique total ou pour les cas utilisant des adjuvants, au moins 50% et moins de 85%. Le sulfate de calcium peut être du type semi-hydrate, alpha ou beta, ou du type anhydrite, par exemple du type anhydrite II ou III. Les matériaux pour chapes selon l'invention remplissent généralement les conditions données dans les normes EN 13813 et 13454-1 relatives aux mortiers
pour chapes et liants (hydrauliques) sulfate de calcium pour chapes.

Les chapes peuvent contenir des adjuvants classiques, tels que dispersants, accélérateurs et/ou retardateurs de prise, agents de viscosité, traceurs, colorants, ciment, agent anti-pellicule de surface. En général, les additifs sont les mêmes que pour les mortiers-colles.

Notamment, les chapes peuvent contenir un dispersant. L'addition à de telles compositions aqueuses de sulfate de calcium anhydre de dispersant est usuelle pour: permettre une réduction de la teneur en eau; empêcher des phénomènes incontrôlables de ségrégation et de ressuage; maintenir dans le temps la fluidité desdites compositions; et permettre des temps de prise (temps de début de prise et de fin de prise) compatibles avec l'application visée.

Par exemple des dispersants peuvent être soit issus de la condensation du formaldéhyde et de naphtalènes sulfonés, soit issus de la condensation du formaldéhyde et de mélamines sulfonées. On peut aussi utiliser des dispersants de type polycarboxylique, constitués essentiellement de polymères comprenant une chaîne polycarboxylique éventuellement salifiée à laquelle sont fixés d'autres groupes pendants, par exemple du type polycarboxylate de polyoxyéthylène.

Dans un mode de réalisation, la chape est hydrofugée. On peut selon un premier mode de réalisation ajouter par exemple 5 à 25% de ciment Portland (OPC). On prendra de préférence un OPC ayant une basse teneur en aluminate tricalcique (teneur par exemple inférieure à 5%, de préférence inférieure à 3%) pour éviter la formation d'ettringite.

Selon un second mode de réalisation, on peut ajouter un agent hydrophobe en une quantité par exemple de 0.5 à 10%. Cet agent est sensiblement le même que celui utilisé pour le mortier-colle, voir infra.

Selon un autre mode de réalisation, l'hydrofugation est obtenue par le choix spécifique de liants polymères (notamment latex), et/ou en des quantités élevées. Un exemple d'hydrofugation par une teneur en liant polymère élevé peut se trouver par exemple dans le document (qui a trait à des enduits) US-P-4657594 qui indique que l'augmentation de la teneur en liant polymère résulte en un effet hydrophobant. Le choix d'un liant du type terpolymère Wacker ci-dessous (voir infra sur le mortier) est aussi possible.
Mortier-colle à base de sulfate de calcium.

Le mortier-colle qui est utilisé dans l'invention est un mortier-colle classique qui comprend un hydrofugeant.

Le mortier-colle comprend un liant hydraulique à base de sulfate de calcium, en général à base de sulfate de calcium semi-hydrate de type alpha ou beta, qui comprend en outre souvent des adjuvants, et des ajouts de fillers tels que CaCO₃ et SiO₂, et qui est mélangé à du sable.

Des adjuvants classiques peuvent être présents dans des proportions variables connues de l'homme du métier.

Le mortier-colle peut comprendre entre 0.1 et 10%, de préférence entre 0.5 et 5% en poids d'accélérateur et/ou retardateur de prise, par rapport au poids total du mortier-colle.

A titre d'accélérateur, on peut utiliser du gypse, un sel de calcium (chlorure, nitrate, formiate, thiosulfate), etc. Le gypse est approprié.

A titre de retardateur, on peut utiliser un acide notamment inorganique, carboxylique ou un aminoacide ou autre, tel que acide borique, l'acide phosporique, etc. On peut utiliser un sel d'un tel acide. Un sel notamment calcique d'un aminoacide (ce qui est communément appelé retardan P^{®}) est approprié.

Un agent rétenteur d'eau et épaississant est aussi ajouté, en une quantité par exemple de 0.1 à 1% par rapport au poids total du mortier-colle. Cet agent rétenteur d'eau peut être un dérivé de cellulose (éther cellulosique) tel que de la méthylhydroxyéthylcellulose (MHEC) ou une gomme telle que gomme de xanthane.

Un dispersant comme pour le liant hydraulique est aussi possible.

Le mortier-colle comprend aussi des liants (polymère, par opposition au liant hydraulique).

Le liant polymère utilisé est un liant polymère classique dans l'art des mortiers-colles, dispersable en phase aqueuse. Il peut se présenter sous la forme d'un extrait sec ou sous forme, par exemple de latex, à 50% dans l'eau. A titre d'exemple de tels liants polymères, on peut mentionner les homopolymères d'alcool polyvinylique, les homopolymères acétates de polyvinyle (plastifiés ou non), les copolymères éthylène/acétate de vinyle (EVA) plastifiés ou non), éthylène/versatate de vinyle, acétate de vinyle/versatate de vinyle, polyacryliques, copolymères acétate de vinyle/acryliques, copolymères styrèniques/acryliques, styrène/butadiène, les terpolymères acétate de vinyle/versatates de vinyle /maléates de vinyle, acétate de vinyle/versatate de vinyle/acryliques, terpolymère vinyl acétate/vinyl ester d'un acide (à chaîne longue)/ester d'acide acrylique, les terpolymères acryliques et leurs mélanges. On pourra ainsi utiliser des combinaisons de liants polymères: co- ou terpolymère acétate de vinyle/copolymère vinylique et copolymère vinylique/copolymère styrènique/acrylique. Lorsque ces polymères sont fournis, ils le sont soit sous forme de poudre, soit sous forme de dispersion dans l'eau (en général selon un taux d'environ 50%). Un liant polymère approprié est par exemple un liant terpolymère du type éthylène/ester de vinyle (notamment laurate de vinyle)/chlorure de vinyle, disponible chez Wacker.

La proportion de liant polymère organique est en général de 0.5 à 10% en poids, préférentiellement entre 0.5 et 5% du poids total du liant hydraulique.

Outre les éléments indiqués ci-dessus, le mortier-colle comprend généralement un ou plusieurs des autres composants suivants: défloculant, charges (comme pour le liant hydraulique), pigment, agent entraîneur d'air, etc., en des quantités connues de l'homme du métier.

L'hydrofugation du mortier-colle peut se faire de deux façons principales.

Selon un premier mode de réalisation, on peut ajouter un agent hydrophobe en une quantité par exemple de 0.5 à 10%. Cet agent peut être notamment un acide gras, un sel d'acide gras, une cire ou un dérivé siliconé; on met en oeuvre de préférence comme acide gras, l'acide oléique ou l'acide stéarique; comme sel d'acide gras, on préfère les sels alcalins ou alcalino-terreux, en particulier les sels de sodium, de potassium, de magnésium ou de calcium; comme dérivé siliconé, on peut citer les siliconates, les silanes, les huiles de silicone hydrogénées, les émulsions de silicone, les émulsions amino-siliconées, les résines alkyl-siloxanes telles que l'hydrogénométhylpolysiloxane et le polydiméthylsiloxane aminé ainsi que leurs mélanges.

Selon un autre mode de réalisation, l'hydrofugation est obtenue par le choix spécifique de liants polymères (notamment latex), et/ou en des quantités élevées. Un exemple d'hydrofugation par une teneur en liant polymère élevé peut se trouver par exemple dans le document (qui a trait à des enduits) US-P-4657594 qui indique que l'augmentation de la teneur en liant polymère résulte en un effet hydrophobant. Le choix d'un liant du type terpolymère Wacker ci-dessus est aussi possible.

Le sable est présent en une quantité variable, par exemple par rapport au liant hydraulique, de 40 à 85% en poids.

Le rapport E/C, avec C le sulfate de calcium, est typiquement compris entre 0.33 et 0.66. Typiquement, la teneur en eau dans la masse après gâchage est de 20 à 24% en poids par rapport au poids total du mortier-colle.

Un exemple de mortier-colle est notamment un mortier contenant en poids sur la base du poids total:
- 50 à 70% de sulfate de calcium, en particulier alpha, de préférence environ 60%;
- 0.5 à 5% d'un accélérateur de prise et/ou retardateur de prise, de préférence environ 2%, l'accélérateur étant du Ball Mill Accelerator (50% gypse + 50% amidon) et le retardateur étant du retardan P^{®};
- 0.1 à 1% d'un agent rétenteur d'eau;
- 0.5 à 5% d'un latex de copolymère à base d'ester de vinyle;
- qsp sable.

Avantageusement, ce mortier-colle correspond à la formule donnée dans l'exemple 2.

### Procédé de collage.

L'invention permet l'application sur une chape à base de sulfate de calcium ayant une humidité résiduelle supérieure à 1%, typiquement comprise entre 1 et 5%, de préférence entre 1 et 3%.

On mesure l'humidité résiduelle de la chape par la méthode dite de la bombe au carbure (annexe I de l'avis technique CSTB 12/04-1392*vl au nom de la chape liquide) ou encore dans le document "revêtements de sols intérieurs en carreaux céramiques ou analogues collés au moyen de mortiers-colles sur chape fluide à base de sulfate de calcium en travaux neuf", CSTB, 15 mars 2005.

Dans la mesure où l'humidité résiduelle est plus élevée que dans l'art antérieur, on peut donc coller plus tôt, à savoir l'application du mortier-colle peut se faire à partir de 7 jours après coulage de la chape, puisque dans ce cas l'humidité résiduelle sera toujours inférieure à 5% à cette échéance.

Le temps est aussi fonction de l'épaisseur de la chape, comme dans l'art antérieur. Typiquement, dans l'état de la technique, pour une chape d'épaisseur 6 cm, la durée avant application du mortier-colle est de 8 semaines pour une humidité résiduelle de 1%, tandis que cette durée est de 3 semaines pour une épaisseur de 3 cm. Avec l'invention, il est possible de coller sur une chape d'épaisseur 6 cm dès 1 à 2 semaines et sur une chape d'épaisseur 3 cm dès la fin de la première semaine.

Par ailleurs, l'importance des risques liés à une trop forte humidité résiduelle dans la chape à base de sulfate de calcium, impose de mesurer systématiquement sur chantier l'humidité résiduelle de la chape, avant réalisation du carrelage, afin de vérifier que l'humidité de la chape à base de sulfate de calcium est réellement inférieure à 1%. (La valeur de 1% a été déterminée empiriquement sur les chantiers réalisés depuis plusieurs dizaines d'années ainsi que la corrélation entre le taux d'humidité et les durées en semaines.)

Le délai entre le coulage de la chape et la réalisation du carrelage est donc variable, et n'est jamais donné qu'à titre indicatif, ce qui peut perturber les plannings de chantiers.

De plus, les méthodes de mesure de l'humidité résiduelle sont, soit très incertaines (mesures par la conductivité électrique), soit destructives et lourdes (mesure par différence de masse après étuvage, ou mesure d'élévation de pression par la réaction du carbure de calcium sur l'eau, méthode dite de la bombe à carbure).

L'invention répond donc à un besoin pour poser un revêtement carrelé sur une chape à base de sulfate de calcium, sans mesurer son humidité résiduelle.

Avec l'invention, il est également possible d'assurer que, pour une épaisseur de chape donnée, quelles que soient les conditions de séchage de la chape, il est possible de coller le carrelage après une période de séchage fixe ; il n'est conséquemment plus nécessaire de mesurer l'humidité résiduelle. En effet, celle-ci ne sera dans aucun cas après 7 jours supérieure à une valeur de 5%, laquelle valeur autorise le collage selon l'invention.

Une durée réduite entre le coulage de la chape et le collage par le mortier-colle permet donc un délai d'accessibilité réduit du sol fini.

L'adhérence mesurée 7 jours après collage du carrelage avec le mortier est, de façon surprenante, très élevée, par exemple 0,5, voire même 0,7 MPa et plus.

Le mortier-colle hydrofugé permet une application sur sols chauffants, et autorise la réalisation d'un ragréage ponctuel 12 heures avant la pose du carrelage.

Une technique de simple encollage ou double encollage est possible.

### EXEMPLES

Les exemples suivants illustrent l'invention sans la limiter.

Dans ces exemples, on coule 4 dalles (25*35*5cm) de mortier La Chape Liquide. Ces chapes sont conservées pendant 7 jours en laboratoire pour permettre le durcissement (prise) et début du séchage. On effectue un ponçage puis dépoussiérage à 7 jours de la chape.

On effectue un collage à 7 jours de carreaux de type Wickelmans (5cm*5cm) sur la totalité de la surface de la chape à l'aide d'un mortier-colle.

On conserve encore 7 jours dans le laboratoire pour permettre le durcissement (prise) de la colle.

On mesure alors l'adhérence en MPa du système (chape + colle + carreau) à l'aide d'un dynamomètre Dynatest motorisé DTE-M600 selon la norme EN 1348.

### Exemple 1.

On compare l'adhérence d'un mortier-colle standard Lanko 556 (commercialisé en 2004) et de ce même mortier additionné de 3% de latex Wacker Vinnapas RI 551 Z.

Les résultats montrent une amélioration de l'adhérence grâce à la formulation additivée, voir infra tableau 1.

### Exemple 2.

On utilise le mortier-colle qui contient en poids sur la base du poids total:
- 60% de sulfate de calcium alpha;
- 0,3% de BMA (mélange 50% gypse + 50% amidon);
- 0,3% d'un sel calcique d'un aminoacide communément appelé retardan P^{®}
- 0.3 % d'un éther cellulosique (MHEC);
- 3% d'un latex de copolymère acétate de vinyle/versatate de vinyle en version poudre;
- qsp sable siliceux.

Les résultats sont donnés dans le tableau 1 infra.

| | Ex. 1 | Ex. 2 |
|---|---|---|
| Adhérence initiale (carreau posé sur la colle après 5 minutes) sur chape à 0% d'humidité | 1,2 N/mm2 | 1,2 N/mm2 |
| Adhérence à temps ouvert (carreau posé sur la colle après 30 minutes) sur chape à 0% d'humidité | - | 0,7 N/mm2 |
| Adhérence initiale sur chape à 1,3% d'humidité | 0,8 N/mm2 | 0,8 N/mm2 |
| Adhérence initiale sur chape à 1,7% d'humidité | - | 0,6 N/mm2 |
| Adhérence initiale sur chape à 2,3% d'humidité | - | 0,6 N/mm2 |
| Adhérence initiale sur chape à 2,7% d'humidité | - | 0,6 N/mm2 |
| Adhérence initiale sur chape à 3,3% d'humidité | 0,6 N/mm2 | 0,7 N/mm2 |

### Exemple 3.

Des résultats comparables ont été obtenus avec une chape contenant 5% d'OPC et le mortier-colle standard c'est à dire non hydrofugé ci-dessus.

## Revendications

1. Procédé de collage :
(i) sur une chape à base de sulfate de calcium ayant une humidité résiduelle de plus de 1% à l'aide d'un mortier-colle à base de sulfate de calcium hydrofugé ; ou
(ii) sur une chape à base de sulfate de calcium hydrofugée ; ou
(iii) sur une chape à base de sulfate de calcium hydrofugée à l'aide d'un mortier-colle à base de sulfate de calcium hydrofugé.

2. Procédé de collage selon la revendication 1, dans lequel l'humidité est comprise entre 1 et 5%, de préférence entre 1 et 3%.

3. Procédé de collage selon la revendication 1 ou 2, après une durée, mesurée après coulage de la chape, inférieure à 3 semaines, de préférence entre 1 et 2 semaines.

4. Procédé de collage :
(i) sur une chape à base de sulfate de calcium après une durée, mesurée après coulage de la chape, inférieure à 3 semaines, à l'aide d'un mortier-colle à base de sulfate de calcium hydrofugé ; ou
(ii) sur une chape à base de sulfate de calcium hydrofugée après une durée, mesurée après coulage de la chape, inférieure à 3 semaines ; ou
(iii) sur une chape à base de sulfate de calcium hydrofugée après une durée, mesurée après coulage de la chape, inférieure à 3 semaines, à l'aide d'un mortier-colle à base de sulfate de calcium hydrofugé.

5. Procédé de collage selon la revendication 4, après une durée comprise entre 1 et 2 semaines.

6. Procédé de collage selon l'une des revendications 4 à 5, sur une chape ayant une humidité résiduelle de plus de 1%, de préférence entre 1 et 5%, avantageusement entre 1 et 3%.

7. Procédé de collage selon l'une des revendications 4 à 5, sans mesure préalable de l'humidité résiduelle.

8. Procédé de collage selon l'une des revendications 1 à 7, sur une chape hydrofugée avec un mortier-colle qui n'est pas hydrofugé.

9. Procédé de collage selon l'une des revendications 1 à 7, dans lequel la chape n'est pas hydrofugée et le mortier-colle est hydrofugé.

10. Procédé de collage selon l'une des revendications 1 à 9, dans lequel le mortier-colle est à base de semi-hydrate alpha.

11. Procédé de collage selon l'une des revendications 1 à 9, dans lequel l'adhérence mesurée 7 jours après collage est supérieure ou égale à 0,5 MPa.

12. Procédé de collage selon l'une des revendications 1 à 10, dans lequel la chape est à base de sulfate de calcium anhydre.

13. Utilisation d'un mortier-colle à base de sulfate de calcium hydrofugé pour le collage sur une chape à base de sulfate de calcium ayant une humidité résiduelle de plus de 1% et/ou après une durée, mesurée après coulage de la chape, inférieure à 3 semaines.
(i) sur une chape à base de sulfate de calcium ayant une humidité résiduelle de plus de 1% ; ou
(ii) sur une chape à base de sulfate de calcium après une durée, mesurée après coulage de la chape, inférieure à 3 semaines ; ou
(iii) sur une chape à base de sulfate de calcium ayant une humidité résiduelle de plus de 1% et après une durée, mesurée après coulage de la chape, inférieure à 3 semaines.
